# EUROPÄISCHE PATENTSCHRIFT

(11) **EP 0 620 565 B1**
(45) Veröffentlichungstag und Bekanntmachung des Hinweises auf die Patenterteilung: **11.08.1999**
(21) Anmeldenummer: 94103081.9
(22) Anmeldetag: 02.03.1994
(51) Int. Cl.: H01B 11/18

(54) **Koaxiales Hochfrequenzkabel**
High-frequency coaxial cable
Câble coaxial à haute fréquence

(30) Priorität: 10.04.1993 DE 4311915; 10.04.1993 DE 4311913; 10.04.1993 DE 4311912
(43) Veröffentlichungstag der Anmeldung: 19.10.1994
(60) Teilanmeldung: 97100827.1
(73) Patentinhaber: ALCATEL, 75008 Paris (FR)
(72) Erfinder: Rohrmann, Peter, Dipl.-Ing., D-41066 Mönchengladbach (DE); Weiss, Alexander, Dr., D-41066 Mönchengladbach (DE); Hög, Georg, Dipl.-Ing., D-41065 Mönchengladbach (DE); Zamzow, Peter, Dipl.-Ing., D-44795 Bochum (DE)
(74) Vertreter: Mende, Dirk

(56) Entgegenhaltungen:
- DE-A- 2 710 098
- FR-A- 2 500 638
- GB-A- 1 172 272
- US-A- 4 896 939

## Beschreibung

Die vorliegende Erfindung betrifft ein koaxiales Hochfrequenzkabel mit einem metallischen Innenleiter und einem rohrförmigen metallischen Außenleiter, die durch eine abstandhaltende Isolierung in ihrer räumlichen Lage zueinander fixiert sind, wobei der rohrförmige Außenleiter längs des Kabels angeordnete Öffnungen zur Abstrahlung elektromagnetischer Energie aufweist.

Zur Übertragung hochfrequenter Energie sind Koaxialkabel seit Jahren bekannt. Je nach Höhe der zu übertragenden Leistung unterscheiden sie sich insbesondere durch ihre äußeren Abmessungen und die Ausbildung der Isolierung zwischen dem Innen- und dem Außenleiter. Gemeinsam ist ihnen jedoch die konzentrische Ausführung sowie die Energieübertragung durch elektrische Strompfade. Mit dem Einzug optischer Übertragungselemente in die Technik hat man bereits in einigen Fällen damit begonnen, elektrischen Übertragungsstrecken optische Datenübertragungselemente parallelzuschalten, sei es um die hiermit zu übermittelnden Daten zu Steuer- oder Regelzwecken einzusetzen oder Schaltvorgänge herbeizuführen, sei es um mit Hilfe des optischen Parallelweges in Form einer Sensorleitung Veränderungen in der Umgebung des Kabels aufzunehmen und entsprechende Signale an eine zentrale Stelle weiterzugeben mit dem Ziel einer Überwachung des jeweiligen Betriebszustandes, z. B. der Betriebstemperatur eines erdverlegten Hochspannungskabels.

In solchen Fällen werden z. B. Lichtwellenleiter in die Verseilzwickel elektrischer Kabel eingelegt, oder ein Draht der elektrischen Abschirmung eines Hochspannungskabels wird durch ein Lichtwellenleiterelement ersetzt, oder, wie im Falle von Freileitungen bereits angewandt, wird ein Lichtwellenleiterelement mit den einzelnen Drähten des Leiterseiles verseilt. Diese Ein- und Verseilung der Lichtwellenleiterelemente in den Schichtenaufbau elektrischer Kabel dient u. a. dem Zweck, dem Lichtwellenleiterelement eine Überlänge mitzugeben, so daß Zugbeanspruchungen, die während der Herstellung des elektrischen Kabels sowie der Verlegung am Montageort auftreten, nicht zu einem Bruch der optischen Faser führen.

Von solchen elektrischen Energiekabeln unterscheiden sich koaxiale Hochfrequenzkabel schon allein durch ihren mechanischen Aufbau. Außerdem muß gewährleistet sein, daß durch zusätzliche Maßnahmen die elektrischen Übertragungseigenschaften des koaxialen Hochfrequenzkabels bei den jeweiligen Betriebsfrequenzen nicht negativ beeinflußt werden.

Abstrahlende Hochfrequenzkabel, auch als Leckkabel bezeichnet, sind einen Innenleiter und einen dazu konzentrischen Außenleiter aufweisende Wellenleiter, bei denen längs des Kabels angeordnete Öffnungen im Außenleiter, z. B. in Form von Schlitzen, der Abstrahlung der an einem Kabelende eingeführten Energie in den umgebenden Außenraum des Kabels dienen, wo diese Energie mit entsprechenden Antennenanlagen aufgefangen und die übermittelten Signale ausgewertet werden. Durch die Einspeisung an einem Ende ergibt sich längs des Kabels aufgrund der natürlichen Kabeldämpfung sowie der fortlaufenden Abstrahlung eine Intensitätsabnahme der abgestrahlten Leistung. Da solche Kabel vor allem in Tunneln montiert sind, um dem durchfahrenden Verkehr, wie Zügen oder Autos, die Möglichkeit zu geben, Signale von außen zu empfangen oder Signale vom Tunnelinnern nach außen weiterzugeben, sind viele Lösungen bekannt, durch Variation der Anzahl von Schlitzen, durch Veränderung von deren geometrischen Formen sowie durch eine bestimmte Zuordnung der Schlitze zueinander die Intensitätsabnahme der abgestrahlten Leistung auf ein vertretbares Maß zu reduzieren (Druckschrift "Cable" der Alcatel Cable, Nummer 6, 1. Quartal 1992, Seiten 16 und 17).

Nun sind aber z. B. in einem Tunnel nicht nur die beschriebenen Hochfrequenzkabel zu montieren, auch andere Datenübertragungsstrecken werden parallel zu diesen geführt, sei es, um vorhandene Verstärkereinrichtungen zu speisen oder zu steuern, sei es, insbesondere bei langen Tunneln, um eine problemlosere Führung der Kabeltrasse zu erreichen. In neuerer Zeit gilt dies vor allem für die Datenübertragung mittels Lichtwellenleitern, die die zusätzliche Verlegung eines Kabels erfordert. Abgesehen davon, daß jede zusätzliche Kabelverlegung an einer Tunnelwandung zusätzlichen Platz erfordert, ist dort, wo Wandbefestigungen ohne weiteres nicht möglich sind, vielmehr auf Aufhängungen zurückgegriffen werden muß, mit einem erheblichen Montageaufwand zu rechnen.

Aus der GB-A-1 172 272 ist ein koaxiales Kabel bekannt, das einen Kern mit mindestens einer Glasfaser aufweist, wobei die Glasfasern von einer lichtundurchlässigen Schicht aus einem dielektrischen Kunststoff umschlossen sind. Auf den so gebildeten Kern ist ein Innenleiter durch wendelförmiges Wickeln oder Flechten aufgebracht. Über einer abstandhaltenden Isolierung ist ein geflochtener Außenleiter vorgesehen.

Die DE-A-27 10 098 betrifft ein Lichtwellenleiterkabel mit einem elektrischen, aus einem hohlen Innenleiter und einem Außenleiter bestehenden koaxialen Paar. In dem hohlen Innenleiter ist wenigstens ein optisches Übertragungselement untergebracht, das sich bei geeigneten Abmessungen frei im Innenleiter bewegen kann.

Ein kombiniertes optisches/elektrisches Kabel zur Verwendung als Unterwasserkabel und ein dazu passender Stecker sind in der US-A-4,896,939 beschrieben. Das Kabel weist zumindest eine optische Faser auf, die von einem ersten rohrförmigen elektrischen Leiter umschlossen ist. Diesen umgibt mit radialem Abstand ein zweiter rohrförmiger elektrischer Leiter, wobei zwischen den beiden Leitern ein Isolierkörper vorgesehen ist. Die elektrischen Leiter dienen zur Energieversorgung entlang des Unterwasserkabels angeordneter optischer Verstärker und anderer unter Wasser vorgesehener elektrischer Einrichtungen.

Der Erfindung liegt die Aufgabe zugrunde, ein einfach und kostengünstig herstellbares, abstrahlendes koaxiales Hochfrequenzkabel anzugeben, das bei kleinen äußeren Abmessungen einen parallelen optischen Übertragungsweg aufweist, bei dem die optische Übertragung ohne Einfluß auf die elektrischen Übertragungseigenschaften ist und im Hochfrequenzkabel angeordnete optische Fasern sicher geschützt sind.

Diese Aufgabe wird gemäß der Erfindung dadurch gelöst, daß der metallische Innenleiter des Hochfrequenzkabels durch ein aus einem längsnahtgeschweißten Metallband bestehendes Mantelrohr eines Lichtwellenleiterelementes gebildet ist, in dem zumindest eine optische Faser lose geführt ist.

Die Erfindung beruht dabei auf der Erkenntnis, daß sich eine optische Faser im Innenleiter des Kabels, also als Zentralelement, gegenüber der Hochfrequenzübertragung, was Dämpfung, Reflexion etc. betrifft, elektrisch neutral verhält. Neben der Einsparung einer mehrfachen Kabelverlegung ist darüber hinaus bei der erfindungsgemäßen Lösung die besonders einfache Montagetechnik für den oder die zentral mitgeführten optischen Fasern hervorzuheben.

Durch die Verwendung des Metallrohres des Lichtwellenleiterelementes als Innenleiter des Hochfrequenzkabels wird die Hochfrequenz- und die optische Übertragung so weit zusammengefaßt, daß der Innenleiter durch das Lichtwellenleiterelement ersetzt wird. Dabei kann das den Innenleiter bildende Mantelrohr aus Stahl, Kupfer oder Aluminium ausgebildet sein.

Wie bereits angedeutet, bestimmen die äußeren Abmessungen des koaxialen Hochfrequenzkabels Frequenzbereich und/oder Übertragungsleistung des Kabels. Durch die vorliegende Erfindung ergibt sich der besondere Vorteil, daß parallele optische und elektrische Übertragungswege bis hin zu den kleinsten äußeren Abmessungen problemlos möglich sind. So kann vorteilhaft der Durchmesser des Mantelrohres, der gleichzeitig Innenleiter des koaxialen Hochfrequenzkabels ist, weniger als 2 mm, vorzugsweise weniger als 1 mm betragen. Solche geringen äußeren Abmessungen des Innenleiters mit entsprechend im Durchmesser verringertem Außenleiter führen zu einer weiteren Miniaturisierung von elektrisch/optischen Übertragungswegen und erschließen damit neue Anwendungsgebiete.

Durch die Verwendung eines längsnahtgeschweißten Metallbandes als Mantelrohr sind auf einfache und kostengünstige Weise beliebige Längen kontinuierlich herstellbar. Das Verfahren gibt aber auch die Möglichkeit, die für die optischen Fasern im Innern des Mantelrohres benötigte Überlänge sicherzustellen. Diese Überlänge kann z. B. durch entsprechende Steuerung oder Regelung der Einlaufgeschwindigkeiten von metallischem Band und optischen Fasern eingestellt werden. Eine andere, bereits bekannte Möglichkeit ist die, das längseinlaufende Metallband vor dem Schließen des Metallrohres durch Verschweißen der Bandkanten zu erwärmen und die beim Abkühlen wirksam werdende Verkürzung des metallischen Rohres über einen Längenabschnitt dazu zu benutzen, den mit gleicher Geschwindigkeit wie das metallische Band einlaufenden optischen Fasern eine Überlänge gegenüber dem umhüllenden Mantelrohr zu sichern.

Darüber hinaus hat das erfindungsgemäße koaxiale Hochfrequenzkabel mit seinen parallelen optischen und elektrischen Übertragungswegen den Vorteil, daß die optischen Fasern des Lichtwellenleiterelementes im Zentrum des Kabels durch das den metallischen Innenleiter bildende Mantelrohr sicher geschützt sind. Durch die zentrale Lage des Lichtwellenleiterelementes ist aber auch eine problemlose Anschlußmöglichkeit sowohl des elektrischen als auch des optischen Übertragungsweges sichergestellt. Wegen der Doppelfunktion des Innenleiters des Hochfrequenzkabels als metallisches Rohr zum Schutz der optischen Fasern und zur elektrischen Übertragung hochfrequenter Energie wird man zweckmäßigerweise die Dicke des metallischen Mantelrohres für das Lichtwellenleiterelement den übertragungstechnischen Erfordernissen des Koaxialkabels anpassen, so daß Wellenwiderstand, Leitungsdämpfung usw., also Charakteristika des Hochfrequenzkabels, den Erfordernissen des Betriebes genügen.

Das erfindungsgemäße abstrahlende Hochfrequenzkabel eignet sich insbesondere für Tunnelstrecken, um neben der Übertragung optischer Signale vom durchfahrenden Verkehr elektrische Signale aufzufangen und weiterzuleiten bzw. dem durchfahrenden Verkehr von außen Informationen zu geben.

Die innerhalb des zentralen Mantelrohres - Innenleiter des Hochfrequenzkabels - befindlichen optischen Fasern können eine Überlänge von mehr als 5 ‰ aufweisen, so daß wirksam werdende äußere Zugkräfte sich nicht nachteilig auf die optischen Übertragungswerte auswirken. Die Erfindung beruht nämlich auf der Erkenntnis, daß im Gegensatz zu bekannten Maßnahmen, eine Überlänge der optischen Fasern durch einen Ein- oder Verseilvorgang herbeizuführen, eine zentrische Anordnung der optischen Fasern mit einer Überlänge von mehr als 5 ‰ zu keinen Änderungen in den optischen Übertragungseigenschaften führt, wenn auf das Lichtwellenleiterelement Zugkräfte einwirken.

Als mechanischer Schutz kann auch eine zusätzliche Isolierung gegenüber dem Leitermaterial vorgesehen sein sowie die heute in anderen Fällen übliche Dichtmasse aus geeigneten, mindestens bei der Füllung fließfähigen Materialien.

Der Innenleiter des koaxialen Hochfrequenzkabels, nach der Erfindung gleichzeitig Mantelrohr des Lichtwellenleiterelementes, wird in der Regel als Glattrohr ausgeführt sein. Falls es jedoch in besonderen Fällen darauf ankommt, daß neben bestimmten elektrischen und optischen Übertragungseigenschaften auch eine erhöhte Flexibilität des Kabels gefordert wird, kann man das Mantelrohr unabhängig vom jeweiligen äußeren Durchmesser auch wellen, um so die notwendige Flexibilität herbeizuführen.

In vielen Fällen ist man darauf angewiesen, erfindungsgemäße Kabel in konfektionierter Form einzusetzen, sei es, daß die Konfektionierung bereits werksseitig erfolgt, sei es, daß sie am Montageort durchgeführt wird. Diesem Zweck dienen sog. Steckverbinder mit zu einer Steckerlängsachse konzentrisch verlaufenden und mit dem Innenleiter des Kabels elektrisch verbindbarem Steckstift. In radialer Richtung mit Abstand und in axialer Richtung zumindest teilweise ist dieser Steckstift von einer Steckbuchse umgeben. Die Steckbuchse ist mit einer Spannhülse verbunden, die eine Spannvorrichtung zum Halten des Steckverbinders an einem Ende des Hochfrequenzkabels aufweist. Derartig ausgebildete Steckverbinder befinden sich schon längere Zeit im Handel und sind z. B. aus der Druckschrift "Cable Connectors" der Firma Cable-Con A/S, Vordingborg, Dänemark vom 01.10.1990 bekannt.

Zum Herausführen der zumindest einen in dem rohrförmigen Innenleiter des abstrahlenden koaxialen Hochfrequenzkabels angeordneten optischen Faser ist es von Vorteil, wenn in dem Steckverbinder ein Führungskanal vorgesehen ist. Der Führungskanal ist dabei ausgehend von dem Steckstift gegenüber der Steckerlängsachse in der der Spannhülse abgewandten Richtung schräg nach außen geneigt.

Mit diesem Steckverbinder ist eine einfache Konfektionierung eines in seinem Innenleiter verlaufende optische Fasern aufweisenden koaxialen Hochfrequenzkabels mit einer seitlichen Ausbringung der optischen Fasern möglich. Der Steckverbinder ist zudem sehr einfach und ohne großen Montageaufwand an ein Kabelende eines erfindungsgemäßen koaxialen Hochfrequenzkabels montierbar. Die Hochfrequenzübertragung wird dabei durch den Steckverbinder nur geringfügig beeinflußt. Eine mit dem Steckverbinder verbindbare Kupplung zweier Kabelenden läßt sich mit herkömmlichen Hochfrequenz- bzw. Lichtwellenleiter-Verbindungselementen auf einfache Art und Weise realisieren.

Für eine besonders einfache und für die Hochfrequenzübertragung den geringsten Einfluß aufweisende Ausbildung des Steckverbinders des konfektionierten Hochfrequenzkabels ist es von Vorteil, wenn der Führungskanal sich durch den Steckstift und die Steckbuchse hindurch erstreckt.

Aus dem gleichen Grund ist es ebenfalls vorteilhaft, wenn der ringförmige Raum zwischen dem Steckstift und der Steckbuchse mit einer Isolierung ausgefüllt ist und der Führungskanal sich durch diese Isolierung hindurch erstreckt.

Um den Einfluß der Ausbringung der optischen Faser aus dem Steckverbinder auf die Hochfrequenz-Übertragung möglichst gering zu halten, ist es vorteilhaft, wenn der Steckstift und die Steckbuchse im Bereich des sich durch sie hindurch erstreckenden Führungskanals mit einem Kunststoff beschichtet sind, so daß eine in dem Führungskanal geführte optische Faser nicht in unmittelbarem Kontakt mit der metallischen Wandung des elektrisch leitenden Steckstiftes bzw. der elektrisch leitenden Steckbuchse steht.

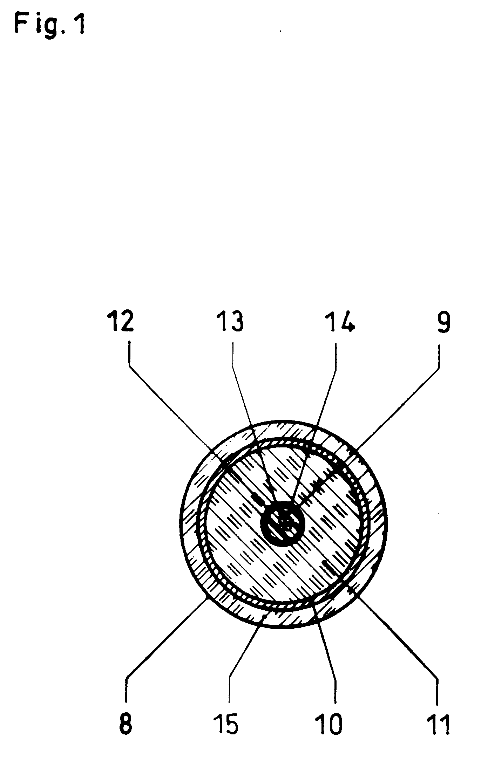

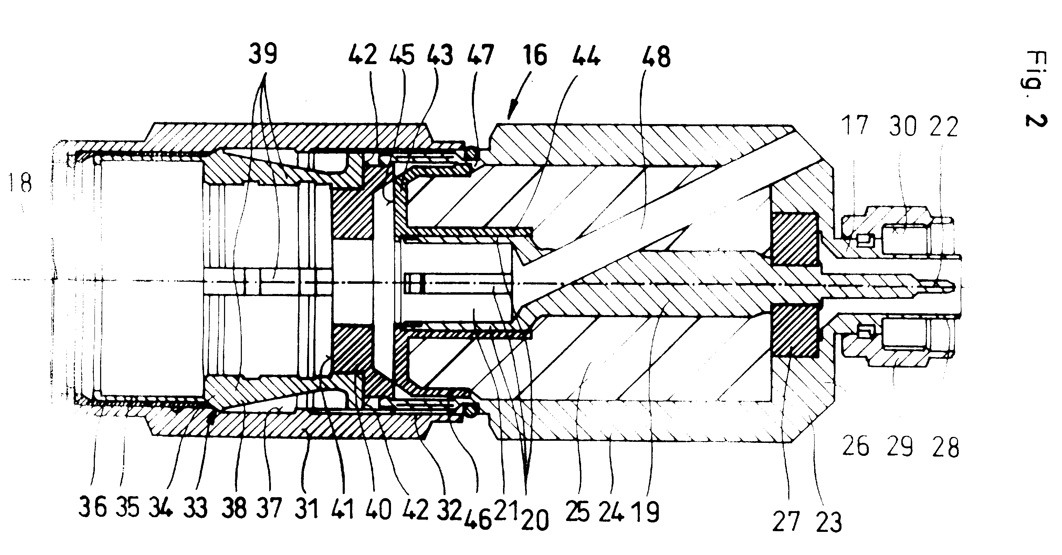

Die Erfindung sei anhand eines in der Figur 1 als Ausführungsbeispiel dargestellten koaxialen Hochfrequenzkabels und eines in der Figur 2 dargestellten, mit dem Hochfrequenzkabel verbindbaren Steckverbinders näher erläutert.

Das in der Fig. 1 dargestellte koaxiale Hochfrequenzkabel 8 weist einen rohrförmigen Innenleiter 9 und einen konzentrisch zu diesem angeordneten Außenleiter 10 auf. Innenleiter 9 und Außenleiter 10, beide rohrförmig ausgebildet, sind durch ein Dielektrikum 11 voneinander getrennt, d. h. elektrisch isoliert. Im dargestellten Ausführungsbeispiel besteht dieses Dielektrikum 11 beispielsweise aus einem geschäumten Polyethylen, das auf den Innenleiter 9 aufextrudiert ist. Das Dielektrikum 11 kann aber auch als Abstandshalterwendel, als Scheibenisolierung oder dergleichen aufgebaut sein. Aus diesen Möglichkeiten resultiert ein weiterer Vorteil der erfindungsgemäßen Lösung, daß nämlich die Integration des optischen Übertragungsweges völlig unabhängig von dem sonstigen Kabelaufbau ist, vorausgesetzt wird lediglich eine koaxiale Anordnung von Innenleiter 9 und Außenleiter 10.

Der Innenleiter 9 ist identisch mit dem Mantelrohr eines optischen Lichtwellenleiterelementes 12, in diesem Fall gebildet durch ein mit einer Überlänge von mehr als 5 ‰ lose im Innenleiter (Mantelrohr) 9 befindliches Bündel aus optischen Fasern 13 sowie eine hier beispielhaft verwendete Dichtmasse 14 aus einem mindestens während der Herstellung fließfähigen polymeren Material. Der mit einer bestimmten Schlitz- oder Lochkonfiguration versehene Außenleiter 10 ist umgeben von einem Außenmantel 15 als mechanischer Schutz, der durch entsprechende Einstellung der hierfür verwendeten Kunststoffmischung abriebfest, aber auch flammfest sein kann.

Der in der Figur 2 beispielhaft dargestellte Steckverbinder zur Konfektionierung eines kombinierten koaxialen Hochfrequenz- und Lichtwellenleiterkabels, das einen rohrförmigen Innenleiter mit zumindest einer darin verlaufenden optischen Faser und einen Außenleiter aufweist, ist mit 16 bezeichnet. Der Steckverbinder 16 weist einen sich konzentrisch zu einer Steckerlängsachse 18 bis zu einem Ende 17 des Steckverbinders erstreckenden Steckstift 19 auf. Der Steckstift 19 ist an seinem dem Ende 17 des Steckverbinders 16 abgewandten Ende mit dem Innenleiter des kombinierten koaxialen Hochfrequenz- und Lichtwellenleiter-Kabels verbindbar. Zu diesem Zweck weist der Steckstift 19 an diesem Ende beispielsweise vier sich dem Ende 17 des Steckverbinders 16 abgewandt erstreckende Kontaktzungen 20 auf, die annähernd einen Kreisring bilden. In eine von den Kontaktzungen 20 umgebene, etwa zylindrische Aufnahme 21 ist der rohrförmige Innenleiter des zu kontaktierenden, vor dem Einschieben in den Steckverbinder 16 abgesetzten koaxialen Hochfrequenzkabels einschiebbar. Die Kontaktzungen 20 sind beispielsweise in radialer Richtung nach innen vorgespannt, so daß sie fest an dem Umfang des rohrförmigen Innenleiters anliegen und auf diese Weise eine gute elektrische Kontaktierung des Innenleiters ermöglichen. An dem Ende 17 des Steckverbinders 16 weist der Steckstift 19 z. B. konzentrisch zu der Steckerlängsachse 18 ein stiftförmiges erstes elektrisches Kontaktelement 22 auf.

Der Steckstift 19 ist in radialer Richtung mit Abstand und in axialer Richtung zumindest teilweise, bei dem dargestellten Ausführungsbeispiel über seine gesamte Länge von einer rohrförmigen, beispielsweise konzentrisch zu der Steckerlängsachse 18 verlaufenden Steckbuchse 23 umgeben. In radialer Richtung zwischen einem dem Ende 17 des Steckverbinders 16 abgewandten Zylinderabschnitt 24 der Steckbuchse 23 und dem Umfang des Steckstiftes 19 ist ein kreisringförmiger Raum gebildet, der beispielsweise mit einer Isolierung 25 ausgefüllt ist. Dem Kontaktelement 27 des Steckstiftes 19 zugewandt weist die Steckbuchse 23 ausgehend von ihrem Zylinderabschnitt 24 einen sich in radialer Richtung nach innen erstreckenden Zwischenabschnitt 26 auf, der bis nahe an den Umfang des Steckstiftes 19 reicht. In radialer Richtung zwischen dem Steckstift 19 und dem Zwischenabschnitt 20 der Steckbuchse 23 ist ein ringförmiger, elektrisch isolierender Abstandshalter 27 angeordnet, der sowohl an der Wandung der Steckbuchse 23 als auch an dem Umfang des Steckstiftes 19 anliegt und auf diese Weise Steckstift 19 und Steckbuchse 23 zueinander zentriert. An dem Ende 17 des Steckverbinders 16 erstreckt sich anschließend an den Zwischenabschnitt 26 parallel und mit Abstand zu dem ersten Kontaktelement 22 des Steckstiftes 19 z. B. konzentrisch zu der Steckerlängsachse 18 ein ringförmiges zweites elektrisches Kontaktelement 28 der Steckbuchse 23. Mit dem Kontaktelement 28 der Steckbuchse 23 ist ein ringförmiges Befestigungsteil 29 verbunden, das beispielsweise mit einem Innengewinde 30 versehen ist. Dieses Innengewinde 30 dient zur Verbindung des Steckverbinders 16 z. B. mit einer Kupplung oder einer Anschlußbuchse eines Gerätegehäuses.

An ihrem dem zweiten Kontaktelement 28 abgewandten Ende des Zylinderabschnittes 24 ist die Steckbuchse 23 mit einem Ende einer rohrförmigen Spannhülse 31 mittels einer Verschraubung 32 verbunden. In der Spannhülse 31 ist eine Spannvorrichtung 33 mit einem Spannelement 34 angeordnet, die zum Halten des Steckverbinders 16 an dem zu konfektionierenden kombinierten koaxialen Hochfrequenz- und Lichtwellenleiter-Kabel sowie zur elektrischen Kontaktierung des Außenleiters des Kabels dient. Das rohrförmig ausgebildete Spannelement 34 ist an einem der Steckbuchse 23 abgewandten Zylinderabschnitt 35 mittels eines zylindrischen Klemmelementes 36 in einer Längsbohrung 37 der rohrförmigen Spannhülse 31 festgeklemmt und weist der Steckbuchse 23 zugewandt einen Kontaktbereich 38 mit einer verringerten lichten Weite auf. Wird ein in geeigneter Weise abgesetztes kombiniertes koaxiales Hochfrequenz- und Lichtwellenleiter-Kabel in den Steckverbinder 16 eingeführt, so wird der Außenleiter des Kabels durch beispielsweise vier Kontaktstreifen 39 des Kontaktbereiches 38 des Spannelementes 34 elektrisch kontaktiert. Die Kontaktstreifen 39 bilden dabei beispielsweise annähernd die Form eines Kreisringes und sind in radialer Richtung nach innen federnd ausgebildet, so daß sie an dem Umfang des Außenleiters anliegen. An ihren dem Steckstift 19 zugewandten Enden ist die Verformung der Kontaktstreifen 39 bzw. ihre Lage in radialer Richtung nach innen durch den Umfang eines ringförmigen Zwischenteils 40 begrenzt. Mit seiner dem Steckstift 19 abgewandten Stirnseite 41 dient das Zwischenteil 40 beispielsweise als axiale Anlage für eine abgesetzte Stufe des Kabels. Das Zwischenteil 40 liegt in axialer Richtung an der Steckbuchse 23 zugewandten Stirnseiten 42 der Kontaktstreifen 39 z. B. nahe der Verschraubung 32 an. Über die Kontaktstreifen 39 des Spannelementes 34, die Spannhülse 31, die Verschraubung 32 und die Steckbuchse 23 steht der Außenleiter des Kabels mit dem zweiten Kontaktelement 28 in elektrisch leitender Verbindung.

Über den Umfang des Steckstiftes 19 ist im Bereich seiner Kontaktzungen 20 eine Steckhülse 43 mit ihrem ersten Zylinderabschnitt 44 aufgeschoben. Die Steckhülse 43 stützt sich mit einer dem Zwischenteil 40 zugewandten, in radialer Richtung ausgehend von dem ersten Zylinderabschnitt 44 nach außen verlaufenden ringförmigen Radialabschnitt 45 an der Isolierung 25 zwischen dem Steckstift 19 und der Steckbuchse 23 ab. An dem Umfang eines sich ausgehend von dem Radialabschnitt 45 in axialer Richtung in Richtung des zweiten Kontaktelementes 28 erstreckenden zweiten Zylinderabschnittes 46 liegt die Steckhülse 43 an der Wandung des Zylinderabschnittes 24 der Steckbuchse 23 sowie in axialer Richtung dem Kontaktelement 28 zugewandt an einem in radialer Richtung nach innen weisenden Halteabsatz 47 des Zylinderabschnitts 24 an.

Ausgehend von dem der Spannvorrichtung 33 abgewandten Ende der Aufnahme 21 des Steckstiftes 19 für den Innenleiter des kombinierten koaxialen Hochfrequenz- und Lichtwellenleiter-Kabels ist in dem Steckverbinder 16 ein durchgehender Führungskanal 48 vorgesehen. Der Führungskanal 48 erstreckt sich gegenüber der Steckerlängsachse 18 in den Kontaktelementen 22 und 28 zugewandter Richtung schräg nach außen geneigt durch den Steckstift 19, die Isolierung 25 sowie die Wandung der Steckbuchse 23 hindurch. Der Führungskanal 48 dient zum seitlichen Herausführen zumindest einer in dem rohrförmigen Innenleiter des kombinierten koaxialen Hochfrequenz- und Lichtwellenleiter-Kabels angeordneten optischen Faser aus dem Steckverbinder 16, so daß mit dem Steckverbinder 16 sehr einfach ein solches kombiniertes Kabel konfektioniert werden kann. Dabei ist der Führungskanal 48 an seiner Wandung im Bereich des Steckstiftes 19 und der Steckbuchse 23 beispielsweise mit einem Kunststoff beschichtet.

## Patentansprüche

1. Koaxiales Hochfrequenzkabel mit einem rohrförmigen metallischen Innenleiter und einem rohrförmigen metallischen Außenleiter, die durch eine abstandhaltende Isolierung in ihrer räumlichen Lage zueinander fixiert sind, wobei der rohrförmige Außenleiter längs des Kabels angeordnete Öffnungen zur Abstrahlung elektromagnetischer Energie aufweist, dadurch gekennzeichnet, daß der metallische Innenleiter (9) durch ein aus einem längsnahtgeschweißten Metallband bestehendes Mantelrohr eines Lichtwellenleiterelementes (12) gebildet ist und daß in dem Mantelrohr zumindest eine optische Faser (13) lose geführt ist.

2. Hochfrequenzkabel nach Anspruch 1, dadurch gekennzeichnet, daß das Mantelrohr des Lichtwellenleiterelementes (12) eine Mehrzahl von mit einer Überlänge von mehr als 5 ‰ lose geführter optischer Fasern (13) enthält.

3. Hochfrequenzkabel nach Anspruch 1 oder 2, dadurch gekennzeichnet, daß der Durchmesser des Mantelrohres weniger als 2 mm beträgt.

4. Hochfrequenzkabel nach einem der Ansprüche 1 bis 3, dadurch gekennzeichnet, daß das den Innenleiter (9) bildende Mantelrohr gewellt ist.

5. Konfektioniertes Hochfrequenzkabel nach einem der Ansprüche 1 bis 4 mit einem am Kabelende angeordneten Steckverbinder, der einen sich konzentrisch zu einer Steckerlängsachse erstreckenden Steckstift, eine diesen in radialer Richtung mit Abstand und in axialer Richtung zumindest teilweise umgebende Steckbuchse und eine mit der Steckbuchse verbundene Spannhülse zum Halten des Steckverbinders an dem Kabelende aufweist, dadurch gekennzeichnet, daß in dem Steckverbinder (16) ein Führungskanal (48) zum Herausführen zumindest einer in dem rohrförmigen Innenleiter (9) des koaxialen Hochfrequenzkabels (8) angeordneten optischen Faser (13) vorgesehen ist und daß der Führungskanal (48) ausgehend von dem Steckstift (19) gegenüber der Steckerlängsachse (18) in der Spannhülse (31) abgewandter Richtung schräg nach außen geneigt ist.

6. Hochfrequenzkabel nach Anspruch 5, dadurch gekennzeichnet, daß der Führungskanal (48) sich durch den Steckstift (19) und die Steckbuchse (23) hindurch erstreckt.

7. Hochfrequenzkabel nach Anspruch 5 oder 6, dadurch gekennzeichnet, daß der ringförmige Raum zwischen dem Steckstift (19) und der Steckbuchse (23) mit einer Isolierung (25) ausgefüllt ist und daß der Führungskanal (48) sich durch diese Isolierung (25) hindurch erstreckt.

8. Hochfrequenzkabel nach einem der Ansprüche 5 bis 7, dadurch gekennzeichnet, daß der Steckstift (19) und die Steckbuchse (23) im Bereich des sich durch sie hindurch erstreckenden Führungskanals (48) mit einem Kunststoff beschichtet sind.

## Claims

1. Coaxial high-frequency cable with a tubular metallic inner conductor and a tubular metallic outer conductor maintained in a fixed spatial position relative to one another by a separating insulator, where the tubular outer conductor is provided with apertures along the length of the cable for radiating electromagnetic energy, characterised in that the metallic inner conductor (9) is formed from a casing tube of an optical waveguide element (12) comprising a longitudinally welded metal strip and that at least one optical fibre (13) is loosely inserted into the casing tube.

2. High-frequency cable in accordance with Claim 1, characterised in that the casing tube of the optical waveguide element (12) contains a plurality of loosely inserted optical fibres (13) with an excess length of more than 5‰.

3. High-frequency cable in accordance with Claim 1 or 2, characterised in that the diameter of the casing tube is less than 2 mm.

4. High-frequency cable in accordance with one of the claims 1 to 3, characterised in that the casing forming the inner conductor (9) is corrugated.

5. Made-up high-frequency cable in accordance with one of the claims 1 to 4 with a plug connection at the end of the cable, which has a peg extending concentrically to a longitudinal axis of the plug, a plug receptacle radially separated from the latter and at least partially surrounding it in an axial direction and an adaptor sleeve connected with the plug receptacle for holding the plug connector to the end of the cable, characterised in that a guide channel (48) is provided in the plug connection (16) for bringing out at least one of the optical fibres (13) disposed within the tubular inner conductor (9) of the coaxial high-frequency cable (8) and that the guide channel (48) emerging from the peg (19) compared with the longitudinal axis of the plug (18) is inclined obliquely outwards in the direction of the adaptor sleeve (31).

6. High-frequency cable in accordance with Claim 5, characterised in that the guide channel (48) extends through the peg (19) and the plug receptacle (23).

7. High-frequency cable in accordance with Claim 5 or 6, characterised in that the annular space between the peg (19) and the plug receptacle (23) is filled with an insulator (25) and that the guide channel (48) extends through this insulator (25).

8. High-frequency cable in accordance with one of the claims 5 to 7, characterised in that the peg (19) and the plug receptacle (23) is coated with a plastic in the region of the guide channel (48) extending through it.

## Revendications

1. Il s'agit d'un câble coaxial à haute fréquence comprenant un conducteur interne métallique en forme de tube et un conducteur externe métallique également en forme de tube, la distance entre les conducteurs est maintenue par un isolant, le conducteur métallique externe diffusant un rayonnement électromagnétique par l'intermédiaire d'ouvertures longitudinales pratiquées dans le câble, ce câble est caractérisé par le fait que son conducteur interne (9) est composé d'un élément de guide d'ondes lumineuses (12) fabriqué à partir d'une bande métallique dont les bords comportent une soudure longitudinale formant ainsi une enveloppe tubulaire, celle-ci contenant au moins une fibre optique (13) montée libre.

2. Câble coaxial à haute fréquence conforme à l'objet de brevet 1, caractérisé par le fait que l'enveloppe tubulaire de l'élément guide d'ondes lumineuses (12) contient plusieurs fibres optiques (13) montée libres et ayant une surlongueur de plus de 5%.

3. Câble coaxial à haute fréquence conforme aux objets de brevet 1 ou 2, caractérisé par le fait que l'enveloppe tubulaire possède un diamètre inférieur à 2 mm.

4. Câble coaxial à haute fréquence conforme à l'un des objets de brevet 1 à 3, caractérisé par le fait que l'enveloppe tubulaire servant de conducteur interne (9) est ondulée.

5. Câble haute fréquence confectionné conformément à l'un des objets de brevet 1 à 4 et équipé à l'une de ses extrémités d'un connecteur de raccordement qui comporte une tige de connexion concentrique par rapport à l'axe longitudinal du connecteur, une douille de raccordement femelle qui sert au moins en partie d'enveloppe et qui dans le plan radial est positionnée à distance, ainsi que d'une bague de serrage reliée à la douille de raccordement et servant à arrêter le connecteur sur l'extrémité du câble, ce câble est caractérisé par le fait que dans le connecteur (16) un canal de guidage (48) est prévu dans le connecteur (16), permettant de guider hors de ce dernier au moins une des fibres optiques (13) contenues dans le conducteur interne (8) du câble coaxial à haute fréquence (8), et par le fait que la position du canal de guidage (48) est oblique par rapport à l'axe du connecteur (18), il démarre de la tige de connexion (19) et se dirige vers l'extérieur dans le sens opposé à la bague de serrage (31).

6. Câble à haute fréquence suivant l'objet de brevet 5, caractérisé par le fait que le canal de guidage (48) est positionné au travers de la tige de connexion (19) et de la douille de raccordement (23).

7. Câble à haute fréquence suivant les objets de brevet 5 ou 6, caractérisé par le fait que l'espace interne cylindrique compris entre la tige de connexion (19) et la douille de raccordement (23) est rempli d'un isolant (25), et par le fait que le canal de guidage (48) traverse cet isolant (25).

8. Câble à haute fréquence suivant un des objets de brevet 5 à 7, caractérisé par le fait que la tige de connexion (19) et la douille de raccordement (23) sont revêtues d'une couche en matière synthétique sur la longueur de passage du canal de guidage (48).
